# EUROPÄISCHE PATENTSCHRIFT

(11) **EP 1 109 698 B1**
(45) Veröffentlichungstag und Bekanntmachung des Hinweises auf die Patenterteilung: **16.10.2002**
(21) Anmeldenummer: 98954270.9
(22) Anmeldetag: 10.09.1998
(51) Int. Cl.: B60N 2/44

(54) **VERFAHREN ZUR HERSTELLUNG EINES SCHAUMKÖRPERTEILES, INSBESONDERE EINES POLSTERSCHAUMTEILES FÜR EINEN FAHRZEUGSITZ**
METHOD FOR PRODUCING A FOAMED BODY PART, ESPECIALLY A FOAMED UPHOLSTERY PART FOR AN AUTOMOBILE SEAT
PROCEDE DE PRODUCTION D'UNE PARTIE DE CORPS EN MOUSSE, EN PARTICULIER D'UNE PARTIE EN MOUSSE DE REMBOURRAGE POUR UN SIEGE DE VEHICULE

(43) Veröffentlichungstag der Anmeldung: 27.06.2001
(73) Patentinhaber: Gottlieb Binder GmbH & Co., 71088 Holzgerlingen (DE)
(72) Erfinder: SCHULTE, Axel, D-71088 Holzgerlingen (DE); TUMA, Jan, D-12681 Berlin (DE)
(74) Vertreter: Patentanwälte Bartels und Partner
(86) Internationale Anmeldenummer: EP9805771
(87) Internationale Veröffentlichungsnummer: WO00015459

(56) Entgegenhaltungen:
- US-A- 4 575 152
- US-A- 4 579 700
- US-A- 5 234 639
- US-A- 5 236 243
- PATENT ABSTRACTS OF JAPAN vol. 097, no. 006, 30. Juni 1997 & JP 09 048017 A (ZOKEI:KK), 18. Februar 1997

## Beschreibung

Die Erfindung bezieht sich auf ein Verfahren zum Herstellen eines Schaumkörperteiles, insbesondere eines Polsterschaumteiles für einen Fahrzeugsitz, mittels einer formgebenden Einschäumform, in der zur Ausbildung zumindest einer Ausnehmung im Schaumkörperteil, die sich zu dessen Oberfläche hin öffnet, mindestens ein Formteil angeordnet wird, das an seiner Außenseite Formflächen für die Erzeugung der Ausnehmung im Schaumkörperteil aufweist, das in der Einschäumform beim Befüllen derselben mit Schaummaterial geformt wird.

Bei Schaumkörperteilen, die mit Überzugsmaterialien versehen werden sollen, wie dies insbesondere bei Polsterschaumteilen für Sitze der Fall ist, dienen die in der Oberfläche des Schaumkörperteiles ausgebildeten Ausnehmungen in der Regel für die Aufnahme von Verankerungsmitteln für die Befestigung des Bezugsmaterials oder die Befestigung des Schaumkörperteiles an einer Unterlage oder einem Gestell. Aus der gattungsbildenden US-A-5,236,243 ist ein Verfahren der eingangs genannten Art bekannt, bei dem in einem betreffenden Polsterschaumteil eines Sitzes Ausnehmungen erzeugt werden, die an ihrer Mündungsöffnung, d.h. an der Oberfläche des Polsterschaumteiles, eine größere lichte Weite als am Grunde der Ausnehmung besitzen. Derartige Ausnehmungen sind zwar einfach herzustellen, weil aufgrund ihrer Querschnittsform ein einfaches Formteil zur Herstellung verwendbar ist, das ein leichtes und einfaches Entformen des Schaumteiles ermöglicht. Derart geformte Ausnehmungen erfüllen jedoch ihre Funktion als Verankerungseinrichtung nur in eingeschränktem Maße, insbesondere sind bei solcher Querschnittsform der Ausnehmung zusätzliche Haltemittel erforderlich, um Bezugsstoffe sicher zu verankern.

Solche Verankerungsprobleme treten dann nicht auf, wenn die betreffenden Ausnehmungen eine Querschnittsform besitzen, die sich im Abstand von der Mündungsöffnung, d.h. im Abstand von der Oberfläche des Schaumteiles, erweitert. Die Herstellung solcher Ausnehmungen, die im wesentlichen die Form einer Nut mit bodenseitigem Hinterschnitt aufweisen, gestaltet sich jedoch äußerst schwierig, weil der gebildete Hinterschnitt der Profilform der Ausnehmung beim Vorgang des Entformens den Austritt des betreffenden Formteiles erschwert. Die Entformung ist nur unter einem hohen Kraftaufwand möglich, was häufig zur Beschädigung des Schaumteiles durch Bruch oder Riß führt.

Der Erfindung liegt die Aufgabe zugrunde, ein Verfahren der in Betracht stehenden Art anzugeben, das die Herstellung von Schaumkörperteilen mit sich bodenseitig erweiternden Ausnehmungen auf einfache Weise, insbesondere ohne erschwerte Entformbarkeit ermöglicht.

Bei einem Verfahren der eingangs genannten Art ist diese Aufgabe erfindungsgemäß dadurch gelöst, daß für die Ausbildung einer solchen Ausnehmung, die im Abstand von der Oberfläche des Schaumkörperteiles eine Erweiterung besitzt, ein Formteil verwendet wird, dessen die Erweiterung erzeugende Formflächen durch eine flexible Wand eines aufblähbaren Hohlkörpers gebildet sind, der durch Zufuhr eines fluiden Druckmediums aus einem zusammengefallenen Zustand in einen die Form der Erweiterung der Ausnehmung bestimmenden, aufgeblähten Zustand überführt wird, in dem die flexible Wand beim Einschäumvorgang die Erweiterung der Ausnehmung im Schaumkörperteil definiert, und daß für das Entformen des Schaumkörperteiles aus der Einschäumform der Hohlkörper durch Abführen des Druckmediums sodann wieder in den zusammengefallenen Zustand überführt wird.

Dadurch, daß erfindungsgemäß die Erweiterung der im Schaumkörperteil beim Einschäumen gebildeten Ausnehmung durch einen Hohlkörper ausgebildet wird, dessen Wände durch Steuerung des Innendruckes im Hohlkörper beweglich sind, läßt sich auf einfachste Weise die einen Hinterschnitt in der Ausnehmung darstellende Erweiterung erzeugen, ohne daß der Vorgang des Entformens behindert wäre, der durchgeführt wird, nachdem durch Abbau des Innendrucks der Hohlkörper wieder in den zusammengefallenen Zustand überführt worden ist, in dem sich das Formteil zusammen mit dem aufblähbaren Hohlraum leicht aus der gebildete Ausnehmung herausziehen läßt.

Vorzugsweise besteht die Wand des Hohlkörpers aus einem hochflexiblen Material, so daß sich der Hohlkörper beim Entformen leicht zusammenlegt. Eine hohe Elastizität des Wandmaterials ist dagegen nicht erwünscht, weil in diesem Falle Form und Volumen im aufgeblähten Zustand druckabhängig wären.

Als Druckmedium kann beispielsweise Druckluft oder ein anderes Gas verwendet werden. Im Fall der Verwendung einer inkompressiblen Flüssigkeit als Druckmedium ist es möglich, den Hohlkörper mit verhältnismäßig geringem Innendruck zu befüllen und nachfolgend mit einem Ventil zu verschließen. In diesem Falle bewirkt der Druck in der Einschäumform eine Druckbeaufschlagung zur Beibehaltung der Form des Hohlkörpers in aufgeblähtem Zustand.

Vorzugsweise wird das Druckmedium in geeigneter Weise temperiert. Durch Befüllen des Hohlkörpers mit einem temperierten Druckmedium, dessen Temperatur von der der Einschäumform abweicht, ist es beispielsweise möglich, die Eigenschaften und die Oberflächenstruktur des Schaummaterials im Bereich der Ausnehmung zu beeinflussen. Insbesondere läßt sich der Anteil geschlossener und offener Poren in der Oberfläche des Schaumkörperteiles variieren, wobei offene Poren die Haftung von Verankerungselementen in der Ausnehmung verbessern, während geschlossene Poren die mechanische Belastbarkeit ihrer Wände verbessern. Denkbar ist sowohl der Einsatz gekühlter als auch erwärmter Druckmedien.

Die Zuleitung des Hohlkörpers ist mit einer Steuer- und Regeleinrichtung versehen, die Druck und/oder Temperatur des Druckmediums einstellt, insbesondere die Befüllung des Hohlkörpers für den Einschäumvorgang und den Abbau des Innendrucks für die Entformung steuert.

Als Material für den ballonartigen Hohlkörper des Formteiles kommen textile Gewebe in Frage, die eine Beschichtung aufweisen, um die notwendige Dichtigkeit zu erreichen und die Haftung am Schaumstoff zu verhindern. In vorteilhafter Weise kann eine Latexbeschichtung vorgesehen sein. Zur Herstellung der Schaumkörperteile, insbesondere der Polsterschaumteile für einen Fahrzeugsitz, können die für diesen Anwendungszweck üblichen Materialien wie Polyurethane oder Polyester verwendet werden, wobei auch eine Armierung, etwa durch Glasfasern, vorgesehen sein kann.

Gegenstand der Erfindung ist auch ein nach dem erfindungsgemäßen Verfahren hergestelltes Schaumkörperteil, das die Merkmale des Anspruches 6 aufweist.

Nachstehend ist die Erfindung anhand von in der Zeichnung dargestellten Ausführungsbeispielen im einzelnen erläutert. Es zeigen:
- Fig. 1: eine stark schematisch vereinfachte perspektivische Darstellung einer einseitig offenen Einschäumform mit einem darin angeordneten Formteil zur Bildung einer Ausnehmung im beim Einschäumvorgang gebildeten Schaumkörperteil;
- Fig. 2: eine vergrößert gezeichnete perspektivische Ansicht des Formteiles von Fig. 1;
- Fig. 3: eine der Fig. 1 ähnliche perspektivische Ansicht, in der die Einschäumform mit Schaummaterial befüllt gezeigt ist;
- Fig. 4: eine schematische Darstellung, die das Formteil von Fig. 2 in Schaumstoffmaterial eingeschäumt zeigt, wobei sich ein aufblähbarer Hohlkörper des Formteiles im aufgeblähten Zustand befindet;
- Fig. 5: eine der Fig. 4 ähnliche Darstellung, wobei der Zustand gezeigt ist, bei dem der Hohlkörper aus dem aufgeblähten Zustand in den zusammengefallenen Zustand überführt wird;
- Fig. 6: eine der Fig. 5 ähnliche Darstellung, die das Entformen des Formteiles mit zusammengefallenem Hohlkörper verdeutlicht, und
- Fig. 7 bis 9: schematische Darstellungen, die unterschiedliche Querschnittsformen von im Schaumkörperteil gebildeten Ausnehmungen mit bodenseitigen Erweiterungen verdeutlichen.

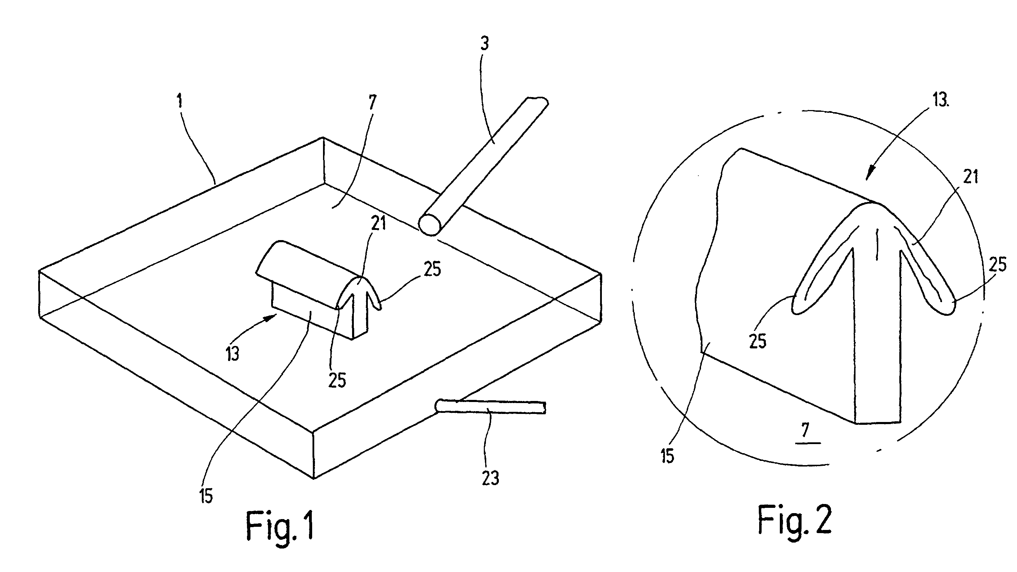

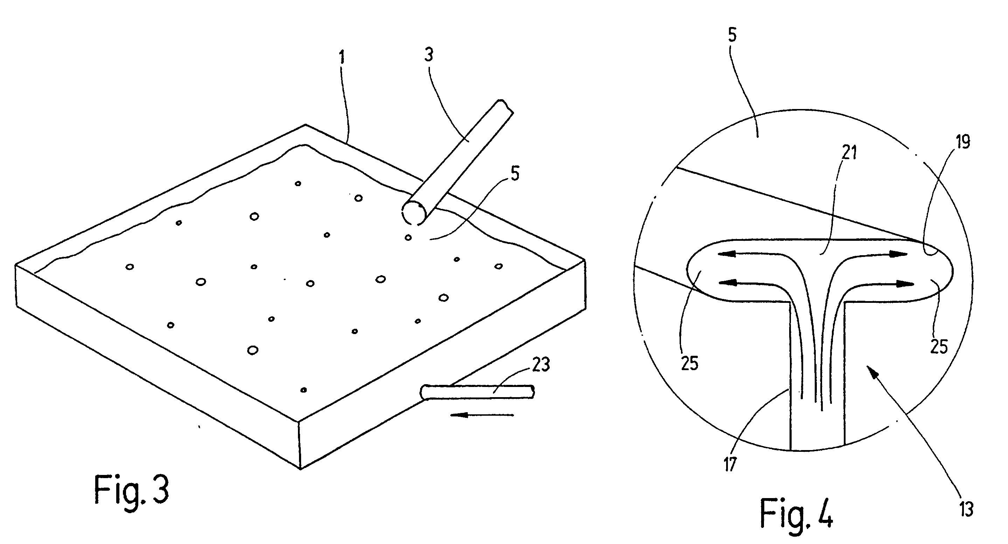

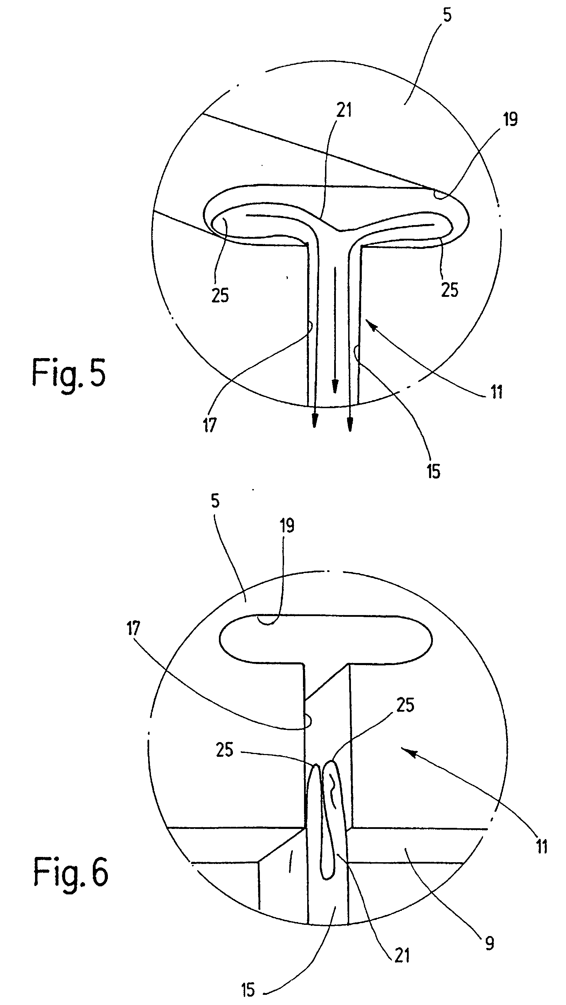

Eine in Fig. 1 und 3 der Übersichtlichkeit halber einseitig offen dargestellte Einschäumform 1 ist über ein Füllrohr 3 mit Schaummaterial befüllbar, um in üblicher Weise einen Einschäumvorgang durchzuführen, bei dem ein Schaumkörperteil 5 (siehe insbesondere Fig. 6 bis 9) erzeugt wird. Dieses weist entsprechend der formgebenden Wandfläche 7 der Einschäumform 1 eine im wesentlichen ebene Oberfläche 9 mit einem etwa quadratischen Umriß auf.

Zur Erzeugung einer sich an der Oberfläche 9 des Schaumkörperteiles 5 öffnenden Ausnehmung 11 ist an der Wandfläche 7 der Einschäumform 1 ein als Ganzes mit 13 bezeichnetes Formteil angebracht. Dieses weist einen leistenförmigen Fußteil 15 auf, der an der Wandfläche 7 der Einschäumform 1 anliegt. Der Fußteil 15 ist ein starrer Körper, der den Abschnitt 17 der Ausnehmung 11 formt, welcher an die Mündungsöffnung an der Oberfläche 9 des Schaumkörperteiles 5 angrenzt. Der leistenartige Fußteil 15 ist ein Profilkörper mit über seine Höhe gleichbleibender Breite, so daß er in der Ausnehmung 11 den Abschnitt 17 in Form einer Nut mit parallelen Seitenwänden formt. Das bodenseitige, also einen größeren Abstand von der Oberfläche 9 des Schaumkörperteiles 5 aufweisende Ende der Ausnehmung 11 ist gegenüber dem Abschnitt 17 erweitert.

Zur Erzeugung dieser Erweiterung 19 weist das Formteil 13 an seinem von der Wandfläche 7 entfernten oberen Ende einen aufblähbaren Hohlkörper 21 auf, der über eine in den Zeichnungen nicht dargestellte Fluidverbindung über den Fußteil 15 und eine nicht gezeigte Leitungsverbindung an der Wandung der Einschäumform 1 mit einer Anschlußleitung 23 für ein fluides Druckmedium in Verbindung ist.

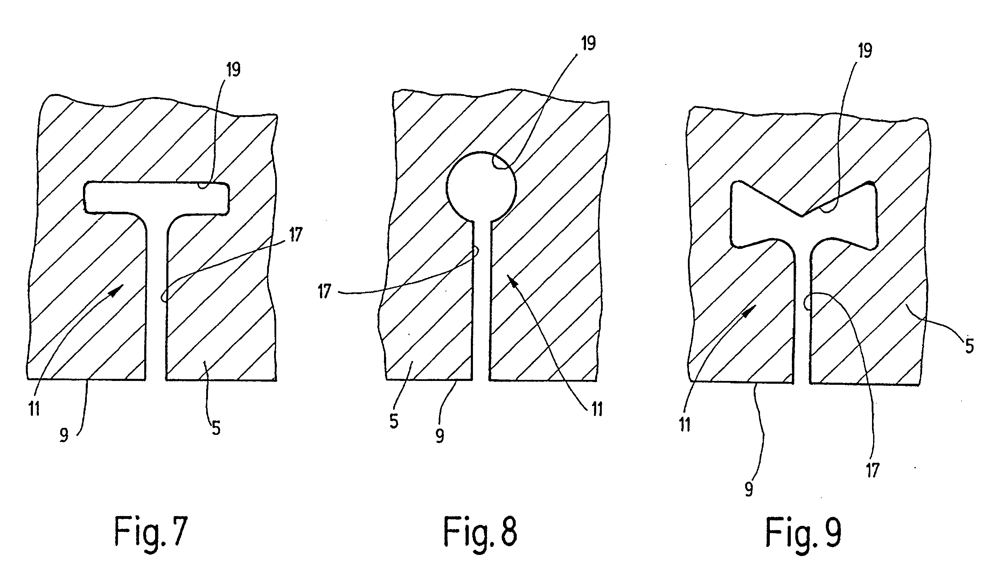

Beim in Fig. 1 bis 6 dargestellten Ausführungsbeispiel weist die flexible Wand des aufblähbaren Hohlkörpers 21 seitliche Flügel 25 auf, die sich beidseits des Fußteiles 15 über dessen gesamte Länge erstrecken. In Fig. 1, 2 sowie 5 und 6 ist der Hohlkörper 21 in nicht aufgeblähtem Zustand gezeigt, so daß die Flügel 25 schlaff und in zusammengefallenem Zustand sind. Wird über die Leitung 23 ein Druckmedium zum Hohlkörper 21 zugeführt, dieser also in den aufgeblähten Zustand überführt, so spreizen sich die Flügel 25 zu der in Fig. 4 gezeigten Form. Wird der aufgeblähte Zustand während des Einschäumvorganges aufrechterhalten, so ergibt sich in der Ausnehmung 11 an dem sich an den vorderen Abschnitt 17 anschließenden hinteren Teil die in Fig. 7 gezeigte Erweiterung 19, d.h. es entsteht eine Ausnehmung 11 mit dem für Verankerungszwecke zu erstrebenden Hinterschnitt.

Für den Vorgang des Entformens wird der Innendruck im Hohlkörper 21 über die Leitung 23 wieder abgebaut, so daß die Flügel 25 schlaff werden, d.h. der Hohlkörper 21 vom aufgeblähten Zustand in den zusammengefallenen Zustand überführt wird, siehe Fig. 5. In diesem Zustand ist ein Entformen problemlos möglich, da die erschlafften Flügel 25, wie in Fig. 6 gezeigt, aneinanderliegend leicht aus dem Abschnitt 17 der Ausnehmung 11 herausgezogen werden können.

Fig. 8 und 9 zeigen Beispiele anderer möglicher Querschnittsformen für die Erweiterung 19 der Ausnehmung 11. Die in Fig. 8 gezeigte kreisrunde Querschnittsform der Ausnehmung 19 ergibt sich beispielsweise durch Verwendung eines am Formteil 13 angebrachten Hohlkörpers 21, der im aufgeblähten Zustand die Form eines runden Schlauches besitzt. Bei dem Beispiel von Fig. 9 weist der entsprechende Hohlkörper 21 seitliche Flügel 25 mit endseitigen Verdickungen auf. Es versteht sich, daß je nach Wahl der Form, die der Hohlkörper 21 im aufgeblähten Zustand einnimmt, die unterschiedlichsten Querschnittsformen der Erweiterung 19 der Ausnehmung 11 erzielbar sind.

## Patentansprüche

1. Verfahren zum Herstellen eines Schaumkörperteiles (5), insbesondere eines Polsterschaumteiles für einen Fahrzeugsitz, mittels einer formgebenden Einschäumform (1), in der zur Ausbildung zumindest einer Ausnehmung (11) im Schaumkörperteil, die sich zu dessen Oberfläche (9) hin öffnet, mindestens ein Formteil (13) angeordnet wird, das an seiner Außenseite Formflächen für die Erzeugung der Ausnehmung (11) im Schaumkörperteil (5) aufweist, das in der Einschäumform (1) beim Befüllen derselben mit Schaummaterial geformt wird, **dadurch gekennzeichnet, daß** für die Ausbildung einer solchen Ausnehmung (11), die im Abstand von der Oberfläche (9) des Schaumkörperteiles (5) eine Erweiterung (19) besitzt, ein Formteil (13) verwendet wird, dessen die Erweiterung (19) erzeugende Formflächen durch eine flexible Wand eines aufblähbaren Hohlkörpers (21) gebildet sind, der durch Zufuhr eines fluiden Druckmediums aus einem zusammengefallenen Zustand in einen die Form der Erweiterung (19) der Ausnehmung (11) bestimmenden, aufgeblähten Zustand überführt wird, in dem die flexible Wand beim Einschäumvorgang die Erweiterung (19) der Ausnehmung (11) im Schaumkörperteil (5) definiert, und daß für das Entformen des Schaumkörperteiles aus der Einschäumform (1) der Hohlkörper (21) durch Abführen des Druckmediums sodann wieder in den zusammengefallenen Zustand überführt wird.

2. Verfahren nach Anspruch 1, **dadurch gekennzeichnet, daß** für die Bildung einer langgestreckten Ausnehmung (11) im Schaumkörperteil (5) ein Formteil (13) mit einem leistenförmigen Fußteil (15) verwendet wird, das mit seinem bodenseitigen Ende an der formgebenden Wand (7) der Einschäumform (1) anliegt und an seinem gegenüberliegenden, oberen Ende den aufblähbaren Hohlkörper (21) aufweist.

3. Verfahren nach Anspruch 2, **dadurch gekennzeichnet, daß** zur Bildung einer Ausnehmung (19) die beidseits der durch den leistenartigen Fußteil (17) des Formteiles (13) definierten Längsachse je eine seitliche Erweiterung (19) aufweist, ein Hohlkörper (21) in Form eines Profilkörpers mit im aufgeblähten Zustand zu beiden Seiten vom leistenartigen Fußteil (17) abspreizbaren Flügeln (25) verwendet wird.

4. Verfahren nach einem der Ansprüche 1 bis 3, **dadurch gekennzeichnet, daß** als Druckmedium eine Flüssigkeit oder ein gasförmiges Medium verwendet wird.

5. Verfahren nach Anspruch 4, **dadurch gekennzeichnet, daß** Druck und Temperatur des Druckmediums mittels einer Steuereinrichtung gesteuert werden.

6. Nach dem Verfahren nach einem der Ansprüche 1 bis 5 hergestelltes Schaumkörperteil (5), das zumindest eine an seiner Oberfläche (9) offene Ausnehmung (11) aufweist, **dadurch gekennzeichnet, daß** die Ausnehmung (11) in einem Abstand von der Oberfläche (9) des Schaumkörperteiles (5) eine die lichte Weite der Ausnehmung (11) vergrößernde Erweiterung (19) besitzt.

7. Schaumkörperteil nach Anspruch 6, **dadurch gekennzeichnet, daß** die Ausnehmung (11) eine T-förmige Querschnittsform besitzt.

8. Schaumkörperteil nach Anspruch 6, **dadurch gekennzeichnet, daß** die Ausnehmung (11) eine Erweiterung (19) mit kreisförmiger Querschnittsform besitzt.

9. Schaumkörperteil nach Anspruch 6, **dadurch gekennzeichnet, daß** die Ausnehmung (11) eine Erweiterung (19) mit einer zumindest näherungsweise einem Mehreck entsprechenden Querschnittsform, vorzugsweise einer Dreieckform, aufweist.

## Claims

1. Method for producing a plastic foam body part (5), in particular a polyester foam part for a car seat, using a plastic foam mould (1) in which is arranged at least one shaped body (13) for forming at least one recess (11) in the plastic foam body, opening towards its surface (9), the said shaped body having shaped faces on its outside to produce the recess (11) in the plastic foam body part (5) which is formed in the plastic foam mould (1) as it is filled with the plastic foam, **characterised in that** a shaped body (13) is used to form such a recess (11) which has an extension (19) at a distance from the surface (9) of the plastic foam body part (5) where the faces producing the extension (19) are formed by a flexible wall of an expandable hollow body (21) transformed from a collapsed state to the expanded state determining the shape of the extension (19) of the recess (11) by the introduction of a fluid pressure medium, whereby the shape of the extension (19) of the recess (11) in the plastic foam body part (5) is determined by the flexible wall during the foaming process and the hollow body (21) and that, in order to remove the plastic foam body from the mould (1), it is transformed back to its collapsed state by removing the pressure medium.

2. A method according to claim 1, **characterised in that** a formed part (13) with a bar-like foot section (15) is used to form an elongated recess (11) in the plastic foam body part (5), the said foot section resting with its bottom end at the shape-giving wall (7) of the plastic foam mould (1) and at its opposite top end it has the expandable hollow body (21).

3. A method according to Claim 2, **characterised in that** a hollow body (21) in the form of a profiled body with the wings (25) expandable to both sides of the bar-like foot section (17), to form a recess (19) which has a side extension (19) on each side of the longitudinal axis defined by the bar-like foot section (17) of the shaped part (13).

4. A method according to one of the claims 1 to 3, **characterised in that** a fluid or a gaseous medium is used as the pressure medium.

5. A method according to Claim 4, **characterised in that** the pressure and the temperature of the pressure medium are controlled by a control device.

6. A plastic foam body part (5), which has at least one recess (11) open at its surface, produced by the method according to one of the claims 1 to 5, **characterised in that** the recess (11) has, at a distance from the surface (9) of the plastic foam body part (5), an enlargement (19) which widens the inside diameter of the recess (11).

7. Plastic foam body part according to claim 6, **characterised in that** the recess (11) has a T-shaped cross section.

8. Plastic foam body part according to Claim 6, **characterised in that** the recess (11) has an enlargement with a circular cross section.

9. Plastic foam body part according to claim 6, **characterised in that** the recess (11) has an enlargement (19) with a cross section approximately corresponding to a polygon, preferably a triangular shape.

## Revendications

1. Procédé de fabrication d'un corps en matière plastique expansée (5), en particulier un élément en plastique expansé pour le rembourrage d'un siège automobile, au moyen d'un moule d'expansion (1), dans lequel, en vue de former dans le corps en plastique expansé au moins une cavité (11) ouverte vers la surface (9) de celui-ci, est disposé au moins un élément de formage (13) dont la face extérieure comporte des surfaces de formage destinées à la réalisation de la cavité (11) dans le corps en plastique expansé (5), qui est formé dans le moule d'expansion (1) pendant le remplissage de celui-ci avec la matière à traiter, **caractérisé en ce que**, pour la réalisation d'une telle cavité (11), qui possède un élargissement (19) à une distance donnée de la surface (9) du corps en plastique expansé (5), on utilise un élément de formage (13) dont les surfaces de formage définissant l'élargissement (19) sont formées par une paroi flexible d'un corps creux gonflable (21) qui, sous l'effet de l'admission d'un milieu sous pression, est amené à partir d'un état dégonflé vers un état gonflé, qui détermine la forme de l'élargissement (19) de la cavité (11) et dans lequel la paroi flexible définit pendant le processus d'expansion l'élargissement (19) de la cavité (11) dans le corps en plastique expansé (5), et **en ce que** le corps creux (21) est à nouveau amené à l'état dégonflé à la suite de l'évacuation du milieu sous pression, afin de pouvoir démouler le corps en plastique expansé (5) hors du moule d'expansion (1).

2. Procédé selon la revendication 1, **caractérisé en ce que** pour former une cavité (11) allongée dans le corps en plastique expansé (5), on utilise un élément de formage (13) avec un pied (15) en forme de plinthe, dont l'extrémité du côté du fond est en appui contre la paroi de façonnage (7) du moule d'expansion (1) et dont l'extrémité supérieure opposée porte le corps creux (21) gonflable.

3. Procédé selon la revendication 2, **caractérisé en ce que**, pour la réalisation d'une cavité (11) avec un élargissement latéral (19) de part et d'autre de l'axe longitudinal défini par le pied (17) en forme de plinthe de l'élément de formage (13), on utilise un corps creux (21) en forme de corps profilé qui, à l'état gonflé, comporte des ailettes (25) extensibles vers les deux côtés du pied (17) en forme de plinthe.

4. Procédé selon une des revendications 1 à 3, **caractérisé en ce que** le milieu sous pression utilisé est un liquide ou un milieu gazeux.

5. Procédé selon la revendication 4, **caractérisé en ce que** la pression et la température du milieu sous pression sont réglées par une unité de commande.

6. Corps en plastique expansé (5), fabriqué selon le procédé selon une des revendications 1 à 5, qui comprend au moins une cavité (11) ouverte sur sa surface (9), **caractérisé en ce que** la cavité (11) comporte un élargissement (19), agrandissant la largeur intérieure de la cavité (11) à une distance donnée de la surface (9) du corps en plastique expansé (5).

7. Corps en plastique expansé selon la revendication 6, **caractérisé en ce que** la cavité (11) possède une section en forme de T.

8. Corps en plastique expansé selon la revendication 6, **caractérisé en ce que** la cavité (11) possède un élargissement (19) avec une section de forme circulaire.

9. Corps en plastique expansé selon la revendication 6, **caractérisé en ce que** la cavité (11) possède un élargissement (19) avec une section de forme au moins approximativement polygonale, de préférence de forme triangulaire.
